Europäisches Patentamt

European Patent Office

Office européen des brevets

(19)

(11) Numéro de publication: **0 328 838**

**A1**

(12) **DEMANDE DE BREVET EUROPEEN**

(21) Numéro de dépôt: 88403318.4

(22) Date de dépôt: 23.12.88

(51) Int. Cl.⁴: **H02P 7/00**

(30) Priorité: **19.01.88 FR 8800572**

(43) Date de publication de la demande:
**23.08.89 Bulletin 89/34**

(84) Etats contractants désignés:
**DE ES GB IT SE**

(71) Demandeur: **ROCKWELL-CIM**
**Tour GAN Cédex 13**
**F-92082 Paris la Défense(FR)**

(72) Inventeur: **Periou Pierre**
**15, les Boccages Bruns**
**F-95000 - Cergy Pontoise(FR)**
Inventeur: **Dauvergne Jean**
**6, rue M. Hilz**
**F-95470 - Fosses(FR)**

(74) Mandataire: **Martin, Jean-Paul et al**
**c/0 CABINET LAVOIX 2, Place d'Estienne d'Orves**
**F-75441 Paris Cedex 09(FR)**

(54) **Dispositif de contrôle d'un moteur à courant continu destiné notamment à la commande d'ouvrants sur des véhicules automobiles.**

(57) Ce dispositif comprend une résistance auxiliaire (R) en série avec le moteur (M), un élément (r) de court-circuit de celle-ci, des moyens de mesure de l'intensité du courant (I) qui traverse alors la résistance auxiliaire (R), ainsi que de la tension (U) dans la ligne d'alimentation du moteur, des moyens de calcul de la résistance du circuit à partir des valeurs mesurées pour (I) et (U), une temporisation (T) apte à exciter l'élément de court-circuit (r) de la résistance (R) aussitôt après le calcul de la résistance du circuit, et des moyens comprenant un microprocesseur (P) pour déterminer automatiquement et en continu la valeur instantanée, soit de la vitesse, soit de la vitesse et du couple du moteur (M), à partir des mesures de l'intensité du courant et de la tension après mise en court-circuit de la résistance auxiliaire (r). Application à la sécurité de manoeuvre des mécanismes commandés par le moteur, notamment des ouvrants de véhicule lorsque ceux-ci rencontrent dans leur course des corps étrangers.

FIG.3

## Dispositif de contrôle d'un moteur à courant continu destiné notamment à la commande d'ouvrants sur des véhicules automobiles

La présente invention a pour objet un dispositif de contrôle d'un moteur à courant continu alimenté par un générateur de tension par l'intermédiaire d'une ligne de résistance déterminée, sur laquelle est placé au moins un relais de commande du moteur dans l'un de ses deux sens de marche.

Plus précisément, ce dispositif a pour objet de contrôler l'une des grandeurs mécaniques délivrées par le moteur, à savoir le couple, ou la vitesse, ou la position angulaire de l'arbre de sortie, ou encore une grandeur dérivée de celles-ci. Dans certains cas, les grandeurs délivrées par le moteur sont des grandeurs intermédiaires, le but effectif étant de contrôler un mécanisme entraîné par le moteur.

On connait de tels dispositifs de contrôle pour certains équipements de véhicule, tels que les ouvrants coulissants (lève-vitre et toit ouvrant) dont on a déjà proposé d'améliorer leur sécurité par des moyens de contrôle permettant d'interrompre la manoeuvre de fermeture, lorsque l'ouvrant rencontre un corps étranger, tel que doigt, membre ou cou d'un occupant (individu ou animal). Un moyen connu consiste en une surveillance électronique de l'intensité du courant du moteur : lorsque l'intensité du courant atteint un seuil dépassant la valeur normale de fonctionnement, le moteur est arrêté et inversé de façon à libérer le corps étranger.

Il a été proposé d'améliorer ce procédé en ne surveillant pas seulement le niveau de l'intensité du courant, mais aussi sa variation dans le temps de façon à anticiper l'interruption de la manoeuvre avant d'atteindre un seuil critique.

Il est apparu que ces dispositifs ne permettent pas de garantir correctement qu'un corps étranger tel qu'un doigt, membre ou cou, ne soit pas lésé. En effet, si à l'inverse, on veut éviter des interruptions intempestives, les seuils de courant ou de variation du courant dans le temps doivent être placés assez haut pour ne pas interférer avec les variations normales dûes aux anomalies courantes que l'on rencontre sur les ouvrants coulissants, tels que : points durs sur les joints, anomalies dûes au givre, etc...

De plus, les conditions électriques variant considérablement avec la tension du générateur et la température (qu influe sur la résistance du circuit), les seuils à placer deviennent incompatibles avec un fonctionnement sans interruption intempestive.

Devant ces difficultés, on a proposé d'adjoindre au moteur un capteur qui permet au dispositif de surveillance électronique de mesurer à tout moment la vitesse du moteur, évitant ainsi les problèmes dûs aux variations des conditions électriques. Dans une réalisation connue comportant un tel capteur, on enregistre le spectre de vitesse en fonctionnement normal de l'ouvrant, de façon à constituer une référence, pour ensuite comparer le fonctionnement réel à cette référence. Si l'évolution en fonctionnement réel s'écarte trop de cette référence, cela signifie qu'un corps étranger se trouve dans la trajectoire, de sorte que le fonctionnement est interrompu et le moteur inversé. Un tel dispositif présente l'inconvénient d'être plus complexe, en raison du capteur à associer au moteur, et surtout de ne pas tenir compte des variations normales que l'on peut rencontrer, surtout après de longues périodes de repos.

L'invention a donc pour objectif de résoudre le problème posé en tenant compte des variations des conditions électriques, notamment celles de la résis tance du circuit.

Le dispositif de contrôle visé par l'invention comprend un générateur de tension continue alimentant un moteur à courant continu par une ligne de résistance déterminée sur laquelle est placé au moins un relais de commande du moteur dans l'un de ses deux sens de marche.

Suivant l'invention, le dispositif de contrôle est caractérisé en ce qu'il comprend une résistance auxiliaire en série avec le moteur, un moyen de court-circuit de celle-ci, dont la valeur est choisie suffisante pour que le moteur ne démarre pas lorsque le relais est fermé, des moyens de mesure de l'intensité du courant qui traverse alors la résistance auxiliaire, ainsi que de la tension dans la ligne d'alimentation du moteur, des moyens de calcul de la somme de la résistance de la ligne et de la résistance interne du moteur à partir des valeurs mesurées pour l'intensité du courant et la tension, une temporisation apte à exciter le moyen de court-circuit de la résistance auxiliaire aussitôt après le calcul de ladite somme des résistances, des moyens de détermination automatique et continue de la valeur instantanée, soit de la vitesse, soit de la vitesse et du couple du moteur à partir d'une mesure continue de l'intensité du courant après mise en court-circuit de la résistance auxiliaire et mesure de la tension, de préférence en permanence.

Ainsi, avant chaque démarrage du moteur, on peut effectuer avec ce dispositif une mesure de la résistance du circuit, dont la valeur est prise comme base de calcul pour la surveillance électronique du moteur.

Selon une forme de réalisation de l'inven tion, la vitesse du moteur est déterminée et asservie à une valeur de consigne par modulation de la tension au moyen d'une alimentation stabilisée associée au microprocesseur.

Selon d'autres formes de réalisation de l'invention :

- le dispositif comporte des moyens de détermination automatique de la vitesse de rotation du moteur, puis d'intégration de cette vitesse dans le temps pour mesurer en continu la position angulaire d'un arbre de sortie du moteur et d'un mécanisme entraîné par ce dernier, et pour comparer cette position angulaire à une valeur de consigne;

- le dispositif comprend des moyens pour initialiser, avant chaque utilisation dudit dispositif, la valeur de consigne de la position angulaire par détection du courant maximum lors d'une arrivée en butée d'un mécanisme entraîné par l'arbre de sortie du moteur;

- le dispositif comprend des moyens de détermination automatique et continue de la vitesse de rotation du moteur, du couple du moteur de la position angulaire de l'arbre de sortie du moteur et du mécanisme entraîné par ce dernier, du rapport de la variation du couple en fonction de ladite position angulaire, des moyens de comparaison dudit rapport et d'un couple limite admissible stocké en mémoire dans le microprocesseur, de comparaison du couple du moteur à ce couple limite, et pour arrêter le moteur si le couple de ce dernier est égal au couple limite.

Le dispositif de contrôle selon l'invention permet donc de tenir compte des variations normales des paramètres considérés du circuit électrique, et ainsi d'éviter d'ordonner des arrêts intempestifs du moteur, non justifiés par des raisons réelles de sécurité.

D'autres particularités et avantages de l'invention apparaitront au cours de la description qui va suivre, faite en référence aux dessins annexés qui en illustrent plusieurs formes de réalisation à titre d'exemples non limitatifs :

- la Figure 1 est un schéma représentant le circuit électrique d'un moteur à courant continu susceptible d'être équipé d'un dispositif de contrôle selon l'invention;

- la Figure 2A est un diagramme illustrant la relation entre la vitesse et le couple du moteur, pour une même tension du générateur, mais avec deux valeurs différentes de la résistance du circuit;

- la Figure 2B est un diagramme montrant la variation du couple du moteur en fonction du courant;

- la Figure 2C est un diagramme montrant la variation de la vitesse de rotation du moteur en fonction du couple pour deux valeurs différentes de la tension du générateur;

- la Figure 3 est un schéma du circuit électrique du moteur équipé d'un dispositif de contrôle selon une première forme de réalisation;

- la Figure 4 est un schéma électrique similaire à la Figure 3, montrant une seconde forme de réalisation du dispositif de contrôle selon l'invention;

- la Figure 5 est une vue de détail illustrant une variante d'exécution du dispositif de contrôle des Figures 3 et 4;

- la Figure 6 est un algorithme ou organigramme illustrant un premier mode de mise en oeuvre du dispositif selon l'invention, dans lequel seule la vitesse de rotation du moteur est déterminée par le logiciel du microprocesseur et comparée à une valeur de consigne;

- la Figure 7 est un algorithme illustrant un second mode de mise en oeuvre du dispositif de contrôle selon l'invention, dans lequel la vitesse de rotation du moteur est intégrée dans le temps par le microprocesseur pour déterminer la position angulaire de son arbre de sortie et la comparer à une valeur de consigne;

- la Figure 8 est un algorithme illustrant un perfectionnement de celui de la Figure 7, dans lequel est mesuré le courant maximum admissible dans le moteur, pour le repérage de la position angulaire de son arbre de sortie;

- la Figure 9 est un diagramme représentant la variation de la force exercée par un ouvrant coulissant entraîné par le moteur, sur un obstacle en fonction de la variation du déplacement du point d'impact de l'ouvrant sur celui-ci;

- la Figure 10 est un algorithme illustrant un quatrième mode de mise en oeuvre du dispositif de contrôle selon l'invention, dans lequel le microprocesseur calcule en permanence la variation du couple du moteur en fonction de la position angulaire de son arbre de sortie, et le couple du moteur est mesuré et comparé à un couple limite de sécurité admissible;

- les Figures 11 et 12 sont des schémas respectivement en plan et en élévation latérale d'un toit ouvrant de véhicule automobile, dont le moteur d'entraînement peut être équipé d'un dispositif de contrôle selon l'invention.

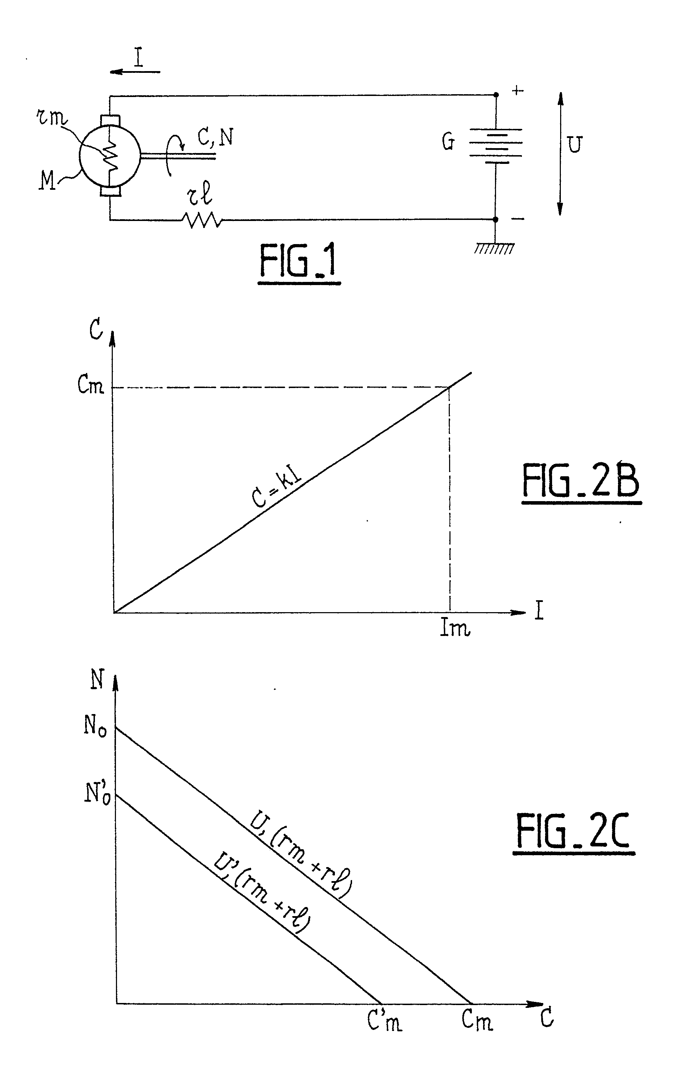

On voit à la Figure 1, le circuit électrique d'un moteur M à courant continu, dont $r_m$ est la résistance interne, $r_l$ est la résistance de ligne, U est la tension du générateur de courant continu, I l'intensité du courant, l'arbre de sortie du moteur M développant un couple C et tournant à une vitesse N.

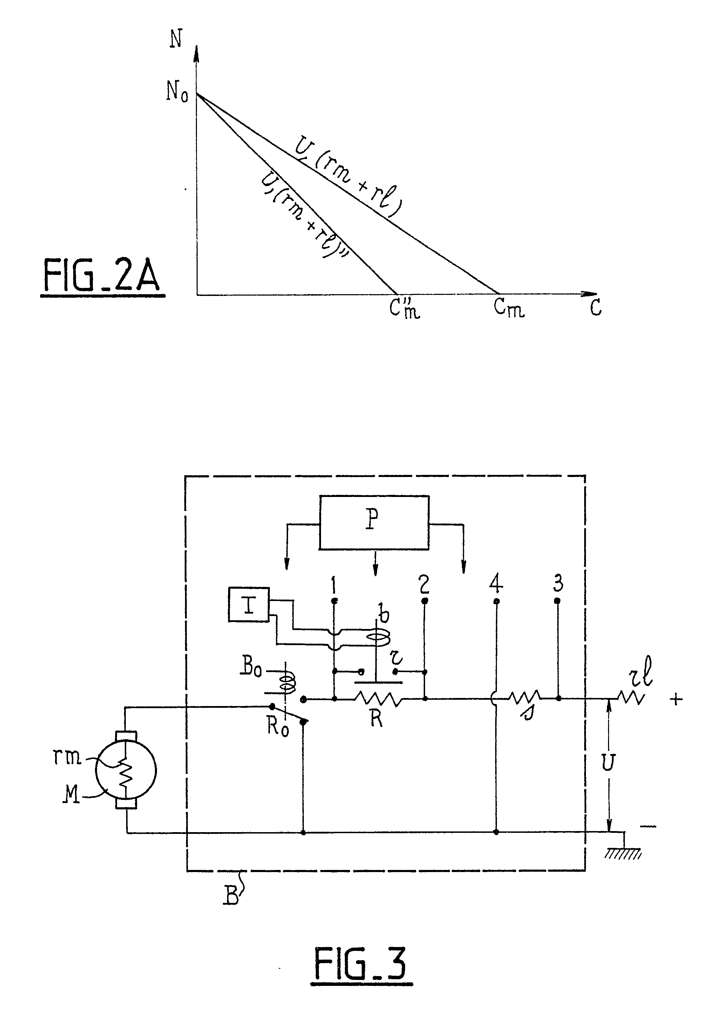

La Figure 2A montre deux courbes de variation linéaire de la vitesse N en fonction du couple C, pour une même tension U mais pour deux valeurs différentes de la résistance du circuit : $(r_m + r_l)$ et

$(r_m + r_l)''$, et la Figure 2C la variation de N en fonction de C pour deux tensions U, U', la résistance du circuit restant constante.

On sait que la relation entre le couple d'un moteur à courant continu et la courant qui le traverse est une relation linéaire du type :

C = kI (Figure 2B)

où k est une constante de construction du moteur. Dans cette relation, le courant maximum $I_m$ correspond au cas où le moteur atteint son couple maximum $C_m$ correspondant à l'état bloqué, où il se trouve à vitesse nulle. Dans ce cas, le moteur se comporte comme une résistance passive dont la valeur est celles de son bobinage. Le courant $I_m$ est alors déterminé par la loi d'Ohm :

$U = (r_m + r_l)I_m$

où U est la tension du génétateur, $r_m$ est la résistance du moteur, $R_l$ est la résistance de la ligne d'alimentation, $r_m + r_l$ est la résistance du circuit (Figure 1).

D'autre part, le couple C est relié à la vitesse N du moteur par la relation :

$$N = N_0\left(1 - \frac{C}{C_m}\right) \quad \text{(Figure 2A)}$$

où $N_0$ est la vitesse à vide. On peut donc également relier la vitesse N au courant I par la relation :

$$N = N_0\left(1 - \frac{I}{I_m}\right)$$

Il est intéressant de noter que $N_0$ est proportionnel à la tension U du générateur, de telle sorte que (Figure 2C) :

$N_0 = k U$

et

$$N = k'U\left(1 - \frac{I}{I_m}\right)$$

où $k'$ est une autre constante de construction du moteur.

Si donc, en plus de la mesure de la résistance du circuit $(r_m + r_l)$ effectuée, on mesure la tension instantanée U et le courant instantané I, on pourra connaitre à tout instant :
- le couple C par la relation
C = kI
- la vitesse N par

$$N = k'U\left[1 - \frac{I(r_m + r_1)}{U}\right]$$

- la position angulaire de l'arbre de sortie par

$$\alpha = \int_0^t N\,dt$$

- la variation de couple par rapport au temps :

$$\frac{\partial C}{\partial t} = k\frac{\partial I}{\partial t}$$

ou par rapport à l'angle $\alpha$

$$\frac{\partial C}{\partial \alpha} = k\frac{\partial I}{\partial t}\cdot\frac{\partial t}{\partial \alpha}$$

avec $\delta t/\delta\alpha$ proportionnel à 1/N.

La Figure 3 montre le circuit électrique de la Figure 1 équipé d'un dispositif de contrôle du moteur M selon une première forme de réalisation. Ce dispositif est contenu dans un boîtier de contrôle B qui comprend: un relais $R_0$ muni d'une bobine $B_0$, une résistance auxiliaire R en série avec le moteur M, un moyen de court-circuit de la résistance R, constitué dans cet exemple par un relais r à bobine b, monté en parallèle sur la résistance R et relié à des bornes référencées 1 et 2.

Le circuit comprend également un shunt s placé entre la résistance R et le pôle + du générateur, et des points de mesure 3, 4 respectivement entre le shunt s et le pôle +, et entre le pôle - et le moteur M. La résistance auxiliaire R est choisie de manière que sa valeur soit suffisante pour que le moteur M ne démarre pas lorsque le relais $R_0$ est fermé, et une temporisation T est associée à la bobine b du relais r.

Le boîtier de contrôle B comprend également un micro-processeur P possédant en mémoire les paramètres du moteur M, c'est-à-dire les caractéristiques permettant de déterminer le couple C en fonction de l'intensité I du courant, donc le couple maximum $C_m$ en fonction du courant maximum $I_m$, la vitesse N en fonction du couple C pour une tension U donnée et pour des valeurs différentes de la résistance de ligne, et de la vitesse N en fonction du couple C pour des tensions U différentes à résistance de ligne constante.

La mise en oeuvre du dispositif de contrôle de la Figure 3 s'effectue de la manière suivante.

Lorsque l'on veut mettre en marche le moteur M, on excite la bobine $B_o$, par exemple à partir d'un interrupteur extérieur (non représenté) mis à la disposition de l'utilisateur ou à partir de tout élément automatique correspondant à l'utilisation du moteur M. L'excitation de la bobine $B_o$ a pour effet de fermer le contact $R_o$.

Cette fermeture permet le passage du courant depuis le générateur à travers la ligne de résistance $r_l$, le shunt s, la résistance auxiliaire R et le moteur M. La résistance R étant assez grande pour que le moteur M ne démarre pas, on peut réaliser une mesure de l'intensité i du courant qui traverse R, en mesurant la tension entre les points 1 et 2 :
$U_{1,2} = Ri$, d'où $i = U_{1,2} / R$

Une mesure de tension U simultanée entre les points 3 et 4 permet donc de déterminer
$r_m + r_l = \dfrac{U}{i} - R$
(la résistance du shunt s étant alors comprise dans la résistance de ligne $r_l$).

Dès cette mesure faite, c'est-à-dire quelques dizaines de millisecondes après l'excitation de la bobine $B_o$, la temporisation T excite la bobine b du relais r de court-circuit, ce qui a pour effet de court-circuiter la résistance auxiliaire R par le relais r. Dès lors, le moteur M se trouve en condition de fonctionnement sous la tension U à travers la résistance de circuit $(r_m + r_l)$ conformément aux Figures 2B et 2C.

La mesure du courant effectuée par mesure de la tension aux bornes du shunt s permet alors d'accéder au couple C (Figure 2B), et ce grâce aux moyens de calcul stockés dans le micro-processeur P pourvu d'un logiciel approprié. Ce dernier contrôle le fonctionnement du moteur selon une loi déterminée, par exemple l'arrêt et son inversion lorsqu'une valeur limite $C_{max}$ du couple, qui sera définie plus loin, est atteinte.

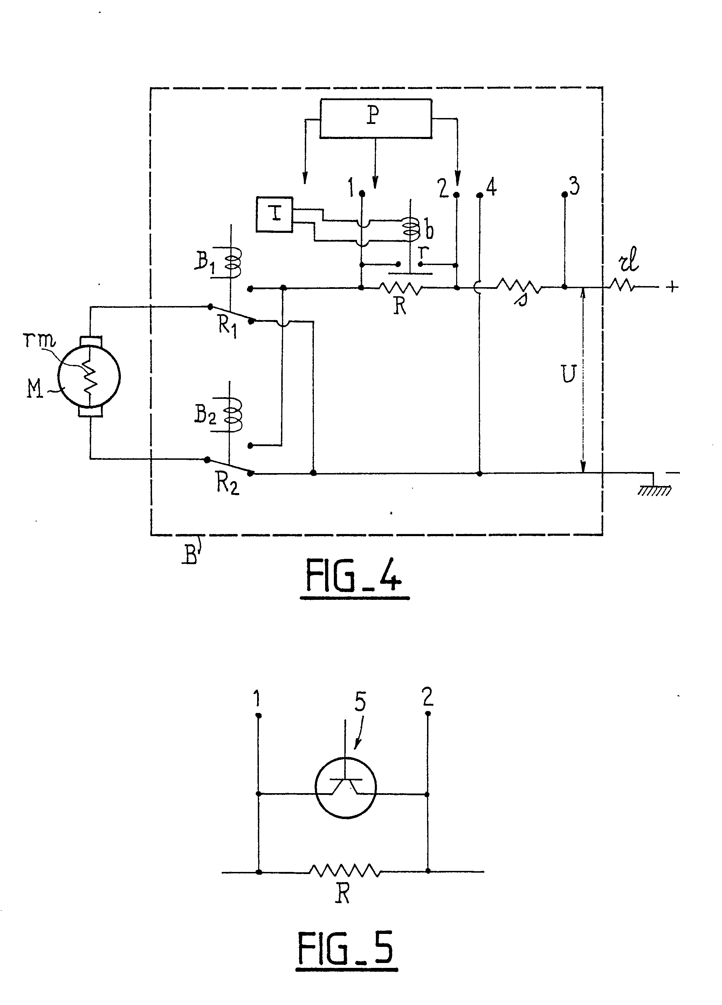

Le circuit de la Figure 4 illustre le fonctionnement du moteur M dans les deux sens de marche. A cet effet, les bornes du moteur sont reliées à deux relais $R_1$ et $R_2$, commandés par des bobines $B_1$ et $B_2$, qui permettent de réaliser l'inversion de polarité, le circuit étant par ailleurs identique à celui de la Figure 3.

Dans la variante d'exécution de la Figure 5, l'élément de court-circuit est un transistor 5 placé en parallèle avec la résistance R.

Le fonctionnement des circuits des Figures 4 et 5 est le même que celui de la Figure 3.

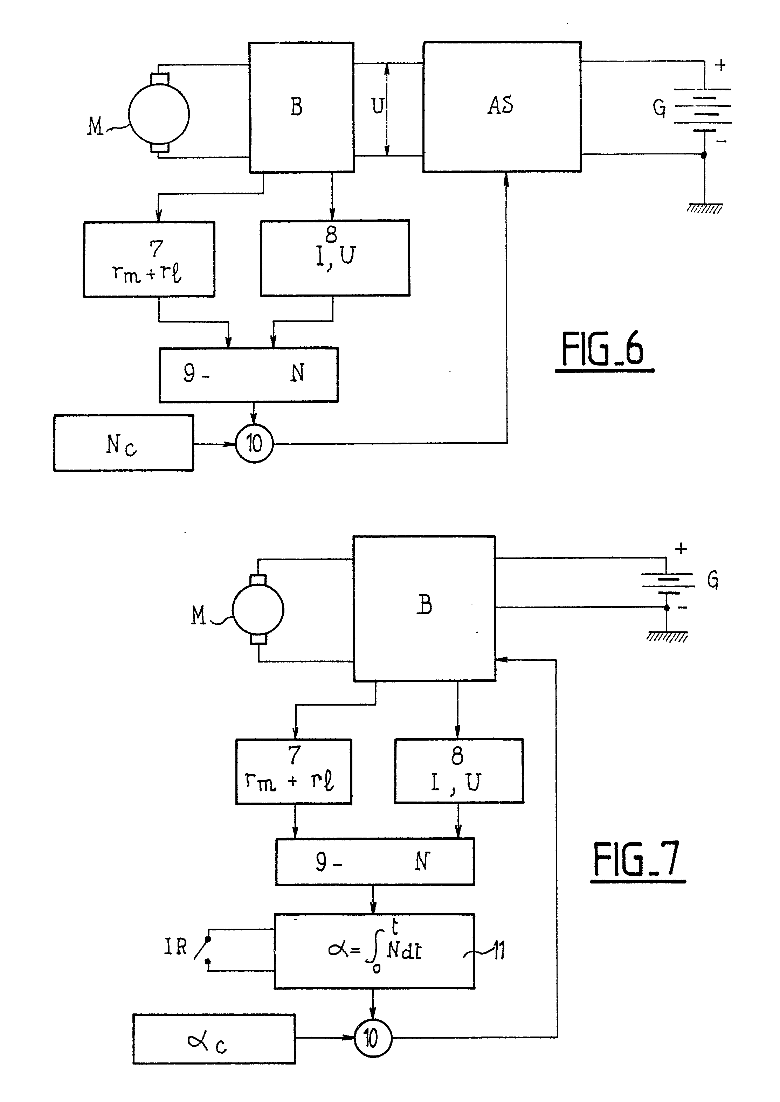

Le schéma synoptique de la Figure 6 représente une forme de réalisation de l'invention dans laquelle le dispositif de contrôle contenu dans le boîtier électronique B est complété par une alimentation stabilisée AS placée en parallèle avec le boîtier B et reliée au générateur G de la tension U, ce mode de réalisation permettant de réguler la vitesse de rotation N du moteur M.

La vitesse N peut être contrôlée par modulation de la tension U. En effet, on a la relation suivante:

$$U = \frac{N}{k'} + I\,(r_m + r_l)$$

Le boîtier de contrôle B peut donc être réalisé pour donner un ordre de régulation à l'alimentation stabilisée AS régulant la tension U d'une manière connue en soi.

A cette fin, le boîtier B et son microprocesseur P exécutent les opérations suivantes : en 7, mesure de la résistance de la ligne $r_m + r_l$, en 8, mesure de I et de U, puis en 9 calcul de la vitesse N, par la relation $N = k'\,[(U - I(r_m + r_l)]$, comparaison en 10 de la vitesse instantanée N avec la vitesse de consigne $N_c$ et régulation de la tension U en fonction du résultat de cette comparaison.

Dans le synoptique de la Figure 7 montrant une autre forme de réalisation de l'invention, le dispositif de contrôle du moteur M ne comporte pas d'alimentation stabilisée et est programmé pour permettre le repérage de la position angulaire de l'arbre de sortie du moteur.

Cette position angulaire du moteur, ou ce qui revient au même, la position du mécanisme qui lui est associé, peut être comparée à une valeur de consigne $\alpha_c$.

La valeur de $\alpha$ est obtenue par intégration de la vitesse N :

$$\alpha = \int_0^t N\,dt$$

N étant calculé comme précédemment par le microprocesseur dans l'étape 9 puis comparé en 10 à $\alpha_c$, avec transmission du résultat de la comparaison au boîtier B.

Il est avantageux de repositionner périodiquement la valeur de la constante d'intégration $\alpha_o$ de $\alpha$, de façon à éviter les dérives cumulatives des erreurs. A cet effet, l'adjonction d'un interrupteur IR (Figure 7) dans la chaîne cinématique, au niveau de l'intégration en 11 de la valeur de $\alpha$ dans le temps, permet d'initialiser ce calcul d'intégration.

Selon une autre forme de réalisation de l'invention, l'initialisation peut être réalisée par détection du courant maximum $I_m$ lors de la venue en butée du mécanisme commandé par le moteur M. C'est le cas d'un lève-vitre de véhicule, pour lequel le courant maximum $I_m$ dans le sens de la montée correspond à la fermeture complète, tandis que le courant maximum $I_m$ dans le sens de la descente correspond à l'ouverture totale de la vitre.

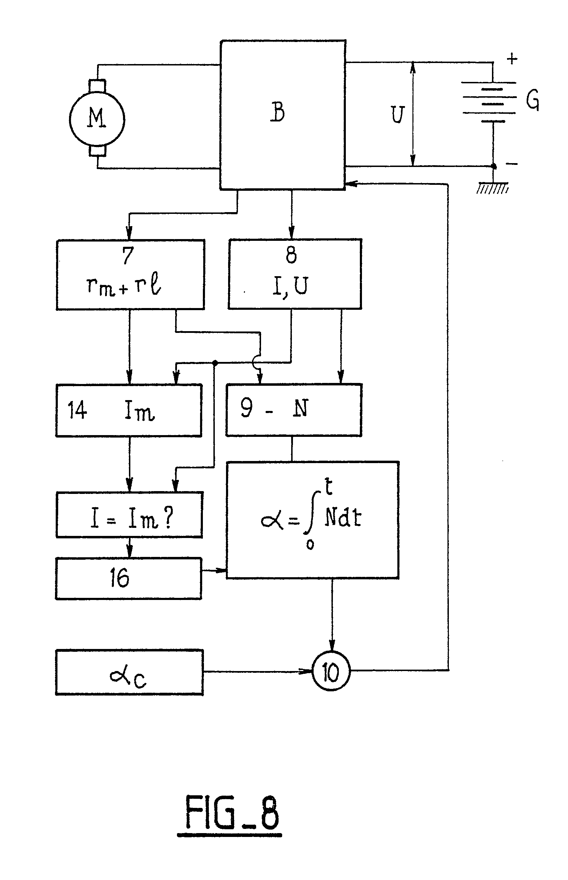

Dans cette application du dispositif de contrôle visé par l'invention, l'algorithme du logiciel est celui de la Figure 8.

On voit sur celui-ci qu'après mesure en 7 et 8 de la résistance de ligne ($r_m$ + $r_l$) et de la tension U, le micro-processeur (P) calcule $I_m$ (étape 14), puis compare la valeur instantanée du courant I à $I_m$, et procède à l'initialisation (étape 16). En même temps, le microprocesseur calcule la vitesse N à partir de I et U, puis l'intègre dans le temps t pour déterminer la position angulaire, qui est ensuite comparée en 10 à la valeur de consigne $\alpha$ c. Les résultats sont exploités de manière à détecter l'arrivée en butée haute ou basse de la vitre et à donner alors l'ordre d'arrêt au moteur M.

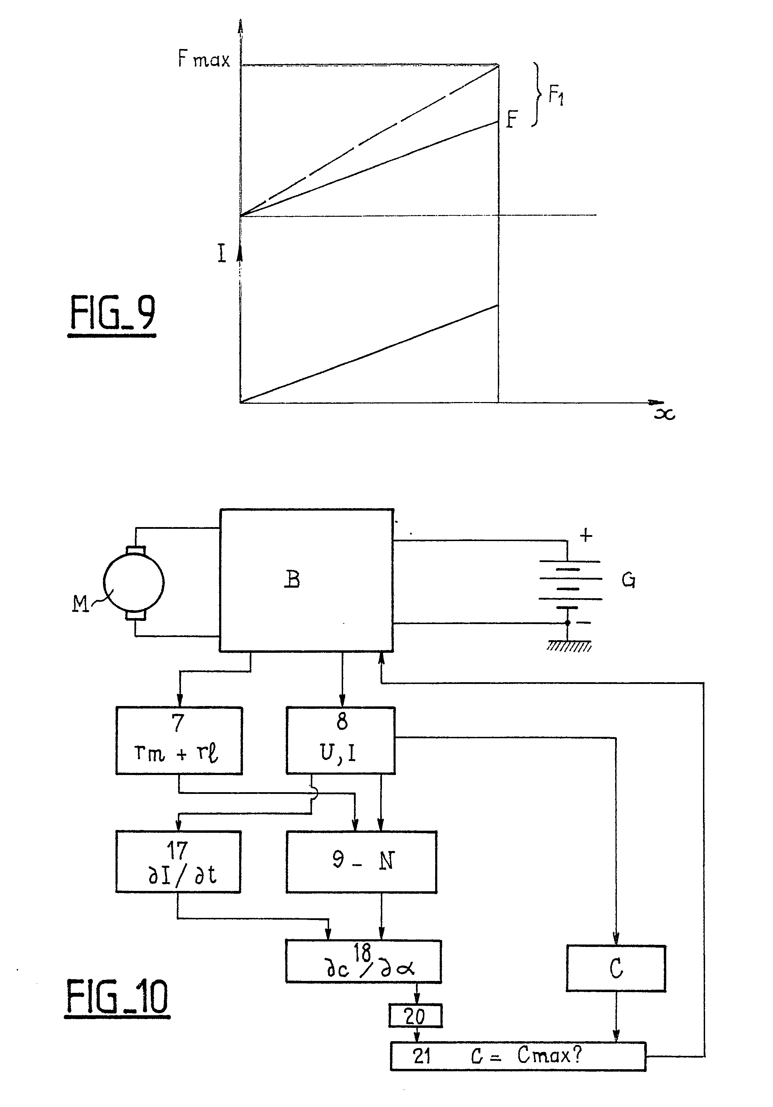

Les Figures 9 et 10 illustrent un autre mode de réalisation de l'invention, dans lequel le dispositif est appliqué au contrôle de la variation du couple pour la sécurité d'un ouvrant coulissant.

On sait que la présence d'un obstacle dans la trajectoire d'un ouvrant coulissant provoque une augmentation de l'effort, proportionnelle au déplacement du point d'impact sur l'obstacle suivant la relation

$$\Delta F = K\Delta x$$

où K est la "raideur" de l'obstacle. Cette force $\Delta F$ correspond à une augmentation du courant du moteur $\Delta I$, mais qui n'est pas reliée directement à $\Delta F$ en raison des effets d'inertie. En effet, plus l'obstacle est raide, plus l'inertie des pièces en mouvement introduit un surcroît d'effort dû à l'énergie cinétique.

En pratique, si l'on veut limiter l'effort sur un corps étranger, on doit arrêter le moteur pour un surcroît de courant d'autant plus faible que la raideur de cet obstacle est importante.

Le diagramme de la Figure 9 illustre la variation de l'effort F exercé sur le corps étranger en fonction du déplacement x du point d'impact sur celui-ci. On voit que l'effet d'inertie se traduit par un accroissement $F_1$ de la force F, qui vient en supplément de la force F effective du mécanisme. On conçoit donc qu'il faut intervenir en arrêtant le moteur en fonction de la vitesse à laquelle le courant varie, ainsi que du niveau de ce courant, de façon à garantir que la force maximale $F_{max}$ n'atteindra pas une valeur dangereuse.

L'algorithme de la Figure 10 montre de quelle façon peut être réalisée la programmation du microprocesseur (P) pour le contrôle de la sécurité d'un ouvrant coulissant tel qu'une vitre de véhicule. Comme dans les réalisations précédentes, le boîtier B mesure tout d'abord en 7 et 8 la résistance $r_m$ + $r_l$, la tension U et l'intensité I du courant, puis le logiciel calcule la vitesse de rotation N (étape 9). Puis (étape 17), le micro-processeur calcule $\delta I/\delta t$ et la variation $\delta C/\delta\alpha$ du couple C en fonction de la position angulaire $\alpha$ (étape 18) en utilisant les relations indiquées précédemment.

$\delta C/\delta\alpha$ est ensuite continuellement comparée en 20 à des valeurs de couples limite, $C_{max}$ de sécurité admissibles, fonctions des différents corps étrangers possibles, cette table de correspondance entre les valeurs $\delta C/\delta\alpha$ et $C_{max}$ étant stockée dans la mémoire du microprocesseur.

Simultanément aux calculs ci-dessus, le microprocesseur détermine en permanence le couple C à partir de la mesure du courant I et (étape 21) compare ce dernier au couple limite $C_{max}$. Si le couple mesuré C est égal au couple limite $C_{max}$, le logiciel arrête automatiquement le moteur M et, le cas échéant, inverse son sens de rotation, si la position angulaire maximum, correspondant à l'arrivée en butée en fin de course, n'est pas atteinte à ce moment. Ce dispositif est particulièrement applicable à un toit ouvrant ou à un lève-vitre de véhicule.

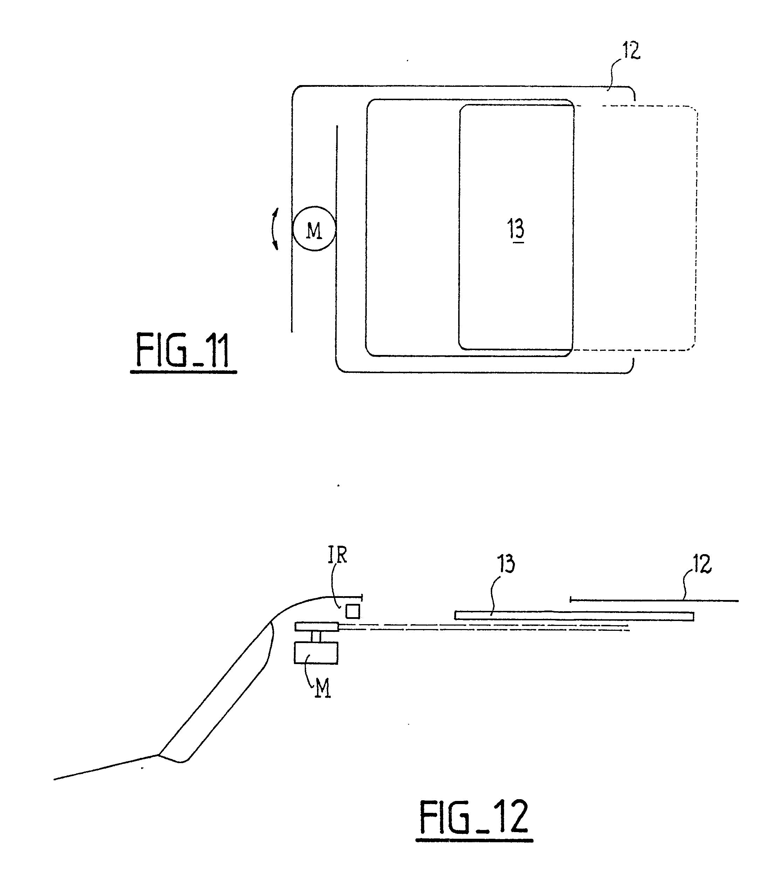

Les schémas des Figures 11 et 12 montrent un véhicule 12 équipé d'un toit ouvrant coulissant 13 commandé par le moteur M par l'intermédiaire de câbles glissières, de façon connue en soi. L'interrupteur IR, correspondant à la réalisation de la Figure 7, permet de localiser la position de fermeture complète de l'ouvrant 13. La consigne $\alpha_c$ est alors fixe et correspond à l'ouverture complète. Une seconde consigne $\alpha_c$, variable, peut être générée par un organe à la disposition de l'utilisateur et le système agit alors comme un sélecteur de position d'ouverture.

## Revendications

1 - Dispositif de contrôle d'un moteur à courant continu (M) alimenté par un générateur de tension (G) par l'intermédiaire d'une ligne de résistance déterminée ($r_l$), sur laquelle est placé au moins un relais ($R_0$; $R_1$; $R_2$) de commande du moteur (M) dans l'un de ses deux sens de marche, caractérisé en ce qu'il comprend une résistance auxiliaire (R) en série avec le moteur, un moyen (r, 5) de court-circuit de celle-ci, dont la valeur est choisie suffisante pour que le moteur ne démarre pas lorsque le relais ($R_0$; $R_1$; $R_2$) est fermé, des moyens de mesure de l'intensité du courant (I) qui traverse alors la résistance auxiliaire (R), ainsi que de la tension (U) dans la ligne d'alimentation du moteur, des moyens (P) de calcul de la somme de la résistance de la ligne ($r_l$) et de la résistance interne ($r_m$) du moteur (M) à partir des valeurs mesurées pour l'intensité du courant (I) et la tension (U), une temporisation (T) apte à exciter le moyen de court-circuit (r ; 5) de la résistance auxiliaire (R) aussitôt après le calcul de ladite somme des résistances, et des moyens comprenant un microprocesseur (P), pour déterminer automatiquement et en continu la valeur instantanée, soit de la vitesse (N), soit de la vitesse (N) et du couple (C) du moteur à partir d'une mesure continue de l'intensité du courant (I) après mise en court-circuit de la résistance auxiliaire (R) et mesure de la tension (U), de préférence en permanence.

2 - Dispositif selon la revendication 1, caractérisé en ce que la vitesse (N) du moteur (M) est déterminée et comparée à une valeur de consigne ($N_c$).

3 - Dispositif selon la revendication 2, caractérisé en ce que la vitesse (N) du moteur (M) est asservie à la valeur de consigne ($N_c$) par modulation de la tension (U) au moyen d'une alimentation stabilisée (AS) associée au microprocesseur (P) (Figure 6).

4 - Dispositif selon la revendication 1, caractérisé en ce qu'il comporte des moyens de détermination automatique de la vitesse de rotation (N) du moteur (M), puis d'intégration de cette vitesse (N) dans le temps (t) pour mesurer en continu la position angulaire ( $\alpha$ ) d'un arbre de sortie du moteur (M) et d'un mécanisme (13) entraîné par ce dernier, et pour comparer cette position angulaire ( $\alpha$ ) à une valeur de consigne ( $\alpha_c$ ) mise en mémoire dans le microprocesseur (P) (Figure 7).

5 - Dispositif selon la revendication 4, caractérisé en ce qu'il comporte des moyens pour initialiser la constante d'intégration ( $\alpha_o$) de la position angulaire ( $\alpha$ ) par détection du courant maximum ($I_m$) lors d'une arrivée en butée d'un mécanisme (13) entraîné par l'arbre de sortie du moteur (M) (Figure 8).

6 - Dispositif selon la revendication 1, caractérisé en ce qu'il comprend des moyens de détermination automatique et continue de la vitesse (N) de rotation du moteur (M), du couple (C) du moteur de la position angulaire ( $\alpha$ ) de l'arbre de sortie du moteur et du mécanisme entraîné par ce dernier, du rapport de la variation du couple (C) en fonction de ladite position angulaire ( $\alpha$ ), des moyens de comparaison dudit rapport et d'un couple limite ($C_{max}$) admissible stocké en mémoire dans le microprocesseur (P), de comparaison du couple (C) du moteur à ce couple limite ($C_{max}$), et pour arrêter le moteur si le couple de ce dernier est égal au couple limite ($C_{max}$) (Figure 10).

7 - Dispositif selon l'une quelconque des revendications 1 à 6, caractérisé en ce que le moyen de mise en court-circuit de la résistance auxiliaire (R) est un relais (r) ou un transistor (5) branché en parallèle aux bornes de cette résistance.

8 - Dispositif selon la revendication 5, caractérisé en ce qu'il comprend un interrupteur (IR) permettant de réinitialiser périodiquement la constante d'intégration ( $\alpha_o$) de ladite position angulaire.

9 - Utilisation d'un dispositif de contrôle d'un moteur à courant continu (M) selon les revendications 2 et 3 à la régulation de la vitesse de déplacement d'un mécanisme lève-vitre dans un véhicule.

10 - Utilisation d'un dispositif selon les revendications 3 et 4 à la commande d'un toit ouvrant coulissant (13) de véhicule, pour localiser la position de fermeture complète du toit ouvrant.

11 - Utilisation d'un dispositif selon les revendications 3 et 4 à la commande d'un mécanisme lève-vitre de véhicule pour détecter la fermeture complète ou l'ouverture complète de la vitre, auxquelles correspondent une butée haute et une butée basse déterminant des positions respectives d'initialisation.

12 - Utilisation d'un dispositif selon la revendication 6 au contrôle de sécurité d'un ouvrant coulissant dans un véhicule tel que toit ouvrant (13) ou lève vitre.

13 - Utilisation d'un dispositif selon la revendication 12 comme sélecteur de position d'ouverture de l'ouvrant en réponse à une consigne variable ( $\alpha_c$) pouvant être générée par un organe à la disposition de l'utilisateur.

FIG.1

FIG.2B

$C = kI$

FIG.2C

EP 0 328 838 A1

FIG.2A

FIG.3

FIG_4

FIG_5

$$\underline{FIG.6}$$

$$\underline{FIG.7}$$

FIG_8

FIG_9

FIG_10

FIG_11

FIG_12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 047 812 (FA. LEOPOLD KOSTAL)<br>* Revendications 1-8; figure 1 *<br>--- | 1-4,6,9 ,10 | H 02 P   7/00 |
| A | US-A-3 231 809 (R.D. GREER)<br>* Colonne 1, lignes 53-64; figure 1 *<br>--- | 1 | |
| A | PATENT ABSTRACTS OF JAPAN, vol. 8, no. 74 (E-236)[1511], 6 avril 1984, page 137 E 236; JP-A-58 222 792 (AISHIN SEIKI K.K.) 24-12-1983<br>* Résumé *<br>--- | 1 | |
| A | DE-A-3 303 590 (KUESTER & CO.)<br>----- | | |

**DOMAINES TECHNIQUES RECHERCHES (Int. Cl.4)**

H 02 P
E 05 F

Le présent rapport a été établi pour toutes les revendications

| Lieu de la recherche | Date d'achèvement de la recherche | Examinateur |
|---|---|---|
| LA HAYE | 03-04-1989 | BEYER F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P0402)